# EUROPÄISCHE PATENTSCHRIFT

(11) **EP 1 381 500 B1**
(45) Veröffentlichungstag und Bekanntmachung des Hinweises auf die Patenterteilung: **19.04.2006**
(21) Anmeldenummer: 02748660.4
(22) Anmeldetag: 17.04.2002
(51) Int. Cl.: B29C 45/50

(54) **PLASTIFIZIEREINHEIT MIT EINEM ELEKTROMOTORISCHEN SPINDELANTRIEB FÜR EINE SPRITZGIESSMASCHINE**
PLASTIFYING UNIT COMPRISING AN ELECTROMOTIVE SPINDLE DRIVE FOR AN INJECTION MOULDING MACHINE
UNITE DE PLASTIFICATION PRESENTANT UNE COMMANDE A BROCHE ELECTROMOTRICE POUR MACHINE A MOULER PAR INJECTION

(30) Priorität: 19.04.2001 AT 6322001
(43) Veröffentlichungstag der Anmeldung: 21.01.2004
(73) Patentinhaber: Demag Ergotech GmbH, 90571 Schwaig (DE)
(72) Erfinder: ICKINGER, Georg, Michael, A-8010 Graz (AT)
(74) Vertreter: Wilhelm, Ludwig
(86) Internationale Anmeldenummer: PCT/EP2002/004231
(87) Internationale Veröffentlichungsnummer: WO 2002/085600

(56) Entgegenhaltungen:
- US-A- 4 601 653
- US-A- 5 980 235
- PATENT ABSTRACTS OF JAPAN vol. 016, no. 103 (M-1221), 13. März 1992 (1992-03-13) & JP 03 277521 A (MITSUBISHI HEAVY IND LTD), 9. Dezember 1991 (1991-12-09)
- PATENT ABSTRACTS OF JAPAN vol. 016, no. 010 (M-1199), 13. Januar 1992 (1992-01-13) & JP 03 231823 A (SANKYO SEIMITSU KANAGATA KK;OTHERS: 01), 15. Oktober 1991 (1991-10-15)

## Beschreibung

Die Erfindung bezieht sich auf eine Plastifiziereinheit für eine Spritzgießmaschine, mit einem Hubantrieb in Form eines elektromotorischen Spindelantriebs und einem zugeordneten, durch den Spindelantrieb in der Rückhubphase beladenen und in der Vorschubphase unter Kraftverstärkung des Elektromotors sich entladenden Arbeitsspeicher.

Aus der WO 97/34757 ist als Hubantrieb für eine Spritzgießmaschine ein Spindelantrieb einschließlich eines Elektromotors und zur Entlastung des Elektromotors in der Vorschubphase ein parallel zu diesem wirkender Arbeitsspeicher in Form einer Druckfederanordnung bekannt, welche beim Rückhub des Spindelantriebs zunehmend beladen und deren Federkraft beim Spindelvorschub entsprechend der Federkennlinie kontinuierlich abnimmt. Der Entlastungseffekt eines derartigen Arbeitsspeichers wird jedoch dadurch erheblich vermindert, dass die Federkennlinie des Arbeitsspeichers nicht mit den hubabhängig stark schwankenden Kraft- und Geschwindigkeitsanforderungen eines Plastifizierantriebs übereinstimmt und sich dies dementsprechend negativ auf den Gesamtenergieverbrauch der Antriebseinheit auswirkt. So muss der Spindelantrieb bei Verwendung als Hubantrieb für die Plastifizierschnecke durch den Elektromotor für die Zeitspanne zwischen Befüll- und Einspritzvor gang entgegen der dann maximalen Vorschubkraft des Arbeitsspeichers in der Rückhubposition gehalten und in der Anfangsphase des Befüllvorgangs, also im Bereich der vorderen Hubposition der Plastifizierschnecke, wo die Federkraft minimal ist, muss die zum Aufbau des geforderten Gegendrucks benötigte Kraftdifferenz ebenfalls vom Elektromotor aufgebracht werden. Ähnliches gilt für die Verwendung eines Spindelantriebs dieser Art als Hubantrieb für die gesamte Plastifiziereinheit: während der Stillstandszeit der Plastifiziereinheit in der Rückhubstellung muss auch hier der Spindelantrieb vom Elektromotor entgegen der maximalen Federkraft im stationären Zustand gehalten und in der Vorschubposition der Plastifiziereinheit muss die Andrückkraft der Einspritzdüse an der Angussbuchse des Spritzwerkzeugs für die gesamte Einspritzdauer ebenfalls vom Elektromotor aufgebracht werden. Das Ergebnis ist, dass die Leistungsanforderungen an den elektromotorischen Spindelantrieb durch die Druckfederanordnung nur in begrenztem Umfang reduziert werden.

Aufgabe der Erfindung ist es, bei einer Plastifiziereinheit der eingangs genannten Art die Leistungsanforderungen an den elektromotorischen Spindelantrieb auf baulich einfache Weise deutlich zu verringern.

Diese Aufgabe wird erfindungsgemäß bei einer Plastifiziereinheit der eingangs genannten Art dadurch gelöst, dass der Spindelantrieb einen parallel zum Arbeitsspeicher zwischen einem der Antriebselemente und einem stationären Gehäuseteil des Spindelantriebs wirkenden, in Abhängigkeit von der Hubposition des Spindelantriebs die effektive Stellkraft des Arbeitsspeichers modifizierenden Steuermechanismus enthält.

Erfindungsgemäß wird die effektive Stellkraft des Arbeitsspeichers durch einfache Steuereingriffe gezielt derart verändert, dass der Spindelantrieb ohne Energieverbrauch seitens des Elektromotors in jeder beliebigen Hubposition, also insbesondere auch der vorderen oder rückwärtigen Hubendlage, stationär gehalten und/oder - wiederum ohne Aktivierung des Elektromotors - zwischen der kennlinienbedingten Federkraft des Arbeitsspeichers und der von diesem in Verbindung mit dem Steuermechanismus ausgeübten, effektiven Stellkraft eine je nach Hubrichtung positive oder negative, größenmäßig dosierbare Kraftdifferenz erzeugt werden kann und somit der Spindelantrieb mit äußerst geringem Bau- und Energieaufwand den schwankenden Geschwindigkeits- und Kraftanforderungen eines Hubantriebs für die Plastifiziereinheit einer Spritzgießmaschine in vollem Umfang genügt.

In baulich besonders vorteilhafter Ausgestaltung enthält der Steuermechanismus eine veränderlich einstellbare Kraftkoppelung zwischen dem speicherkraftbeaufschlagten Antriebselement und dem Gehäuseteil des Spindelantriebs, und zwar vorzugsweise eine hubwegabhängig betätigte Bremse oder eine impulsgesteuert freischaltbare Arretierung in Form einer Kupplung oder einer selektiv lösbaren Einwegsperre.

Als Steuermechanismus wird vorzugsweise eine bremskraftregulierbare Reibbremse dann eingesetzt, wenn der Spindelantrieb zur Hubsteuerung der Plastifizierschnecke relativ zum Plastifizierzylinder verwendet wird. In diesem Fall übernimmt die Reibbremse nicht nur die Arretierung des speicherkraftbeaufschlagten Antriebselements in vorgewählten Hubpositionen, sondern erzeugt auch gemeinsam mit dem Arbeitsspeicher in der Anfangsphase des Befüllvorgangs den zur Rückhubhemmung der Plastifzierschnecke erforderlichen, im Allgemeinen konstanten Gegendruck, falls die Schubkraft des Arbeitsspeichers, der sich dann ja im minimalen Ladezustand befindet, hierfür nicht ausreicht. Im alternativen Anwendungsfall, z.B. als Hubantrieb für die gesamte Plastifiziereinheit, genügt als Kraftkoppelung zwischen dem speicherkraftbeaufschlagten Antriebselement und dem stationären Gehäuseteil des Spindelantriebs eine einfache Kupplung oder Einwegsperre, die durch einen Steuerimpuls zwischen einer Sperr- und einer Freigabestellung umschaltbar ist.

Während die Federkennlinie des Arbeitsspeichers selbst nicht vom Steuermechanismus verändert wird, ist die Federvorspannung vorteilhafterweise variabel voreinstellbar, um den Arbeitsspeicher an unterschiedliche Bauformen von Plastifiziereinheiten anzupassen, wobei der Arbeitsspeicher vorzugsweise aus einem Tellerfederpaket besteht, welches zugleich auch die drehsichere Führung der Spindelstange gegenüber der Spindelmutter übernimmt.

Die Erfindung wird nunmehr anhand zweier Ausführungsbeispiele in Verbindung mit den Zeichnungen näher erläutert. Es zeigen in stark schematisierter Darstellung:
- **Fig. 1**: die Plastifiziereinheit einer Spritzgießmaschine mit einem Spindelantrieb zur Hubsteuerung der Plastifiziereinheit und einem weiteren Spindelantrieb zur Steuerung des Schneckenhubs;
- **Fig. 2**: ein erstes Ausführungsbeispiel eines Spindelantriebs;
- **Fig. 3**: ein weiteres Ausführungsbeispiel eines Spindelantriebs; und
- **Fig. 4**: den prinzipiellen Kraftverlauf eines Spindelantriebs zur Schneckenhubsteuerung einer Plastifiziereinheit in aufeinanderfolgenden Arbeitsphasen mit den jeweiligen elektromotorischen und Speicherkraftanteilen.

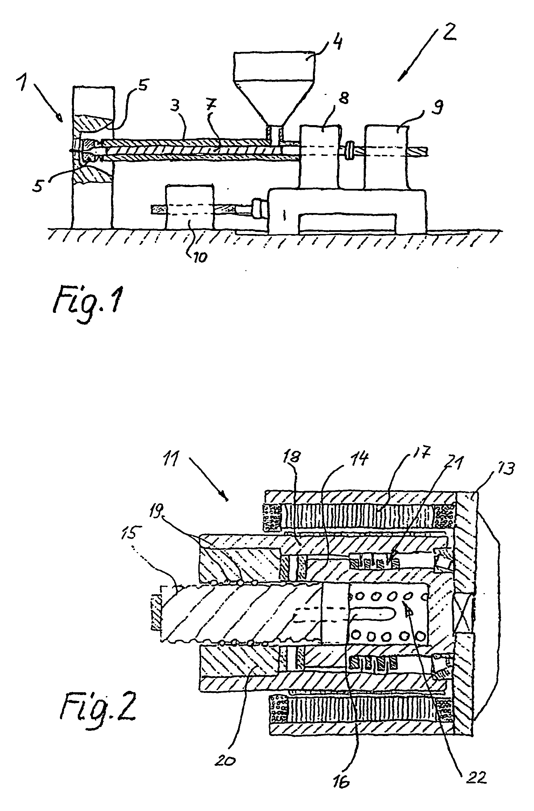

Die in den Fig. 1 gezeigte Spritzgießmaschine enthält als Hauptbestandteile eine - in der Fig. nur teilweise dargestellte - Schließeinheit 1 und eine auf dem Maschinenbett in Richtung der Schließeinheit 1 linear verfahrbare Plastifiziereinheit 2, bestehend aus einem Plastifizierzylinder 3 mit einem Einfülltrichter 4 und einer am vorderen Zylinderende angeordneten, in der Einspritz- und Nachdrückphase federelastisch an die Angussöffnung 5 der Schließeinheit 1 dichtend angepressten Einspritzdüse 6, sowie aus einer im Plastifizierzylinder 3 rotatorisch und axial verschieblich angeordneten Plastifizierschnecke 7, deren Rotationsbewegung von einem Drehantrieb 8 und deren Linearbewegung durch einen Hubantrieb 9 gesteuert werden. Ein weiterer Hubantrieb 10 steuert die Hubbewegung der Plastifiziereinheit 2 auf dem Maschinenbett.

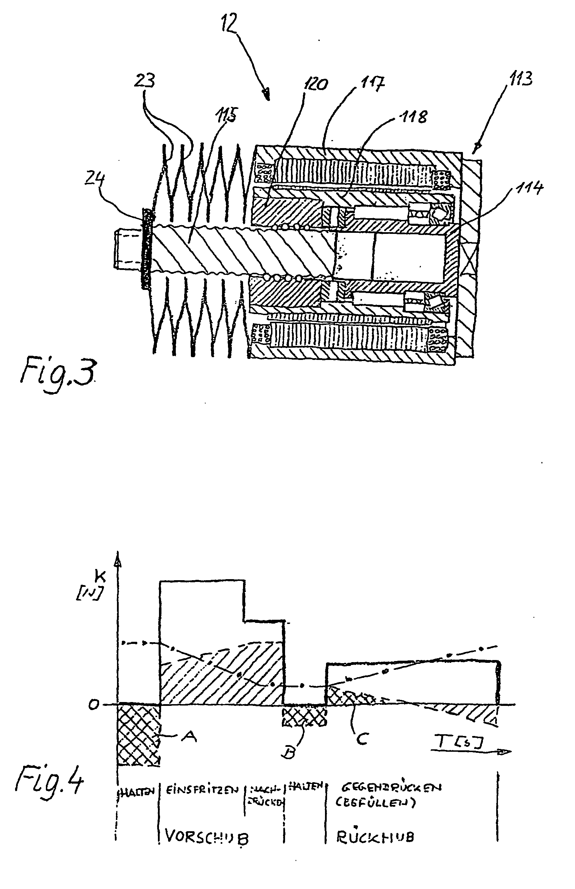

Beide Hubantriebe 9, 10 sind als elektromotorische Spindelantriebe ausgebildet und im Einzelnen in den Fig. 2 und 3 dargestellt, wobei der Spindelantrieb 11 (Fig. 2) zur Hubsteuerung der Plastifizierschnecke 7 und der Spindelantrieb 12 (Fig. 3) zur Hubsteuerung der Plastifiziereinheit 2 eingesetzt wird.

Der Spindelantrieb 11 enthält ein stationäres Gehäuseteil 13 mit einem Aufnahmeteil 14, in welchem eine Spindelstange 15 längsverschieblich, aber z.B. über Keilnuten 16 drehsicher geführt ist, sowie mit einem elektrisch erregten Stator 17, welcher gemeinsam mit dem am Aufnahmeteil 14 drehbar gelagerten Rotor 18 den elektromagnetischen Antriebsteil des Spindelantriebs 11 bildet. Am Rotor 18 ist die über Wälzlagerkugeln 19 mit der Spindelstange 15 gekoppelte Spindelmutter 20 befestigt. Zwischen dem Rotor 18 und dem Aufnahmeteil 14 befindet sich ein Steuermechanismus 21 in Form einer bremskraftregulierbaren Reibbremse, und im Aufnahmeteil 14 ist ein die Spindelstange 15 in Vorschubrichtung beaufschlagender, aus einer Schraubendruckfeder 22 bestehender Arbeitsspeicher angeordnet, welcher beim Spindelvorschub eine Kraftverstärkung des elektromotorischen Antriebsteils 17, 18 bewirkt und durch diesen beim Rückhub der Spindelstange 15 beladen wird.

Der Kraftverlauf des Spindelantriebs 11 ist in stark vereinfachter Form aus Fig. 4 ersichtlich, wobei die Schubkraft K der Spindelstange 15 in einer durchgehenden Linie, der Kraftanteil des Elektromotors 17, 18 gestrichelt und die Federkennlinie des Arbeitsspeichers 22 strichpunktiert dargestellt sind. Am Ende der Plastifizierphase wird die Plastifizierschnecke 7 durch die Spindelstange 15 entgegen der maximalen Speicherkraft des dann voll beladenen Arbeitsspeichers 22 in der Rückhubposition gehalten. Wird die hierzu benötigte Haltekraft vom Elektromotor 17, 18 aufgebracht, so erfordert dies den in Fig. 4 kreuzschraffiert dargestellten, elektrischen Energieanteil A, der jedoch aufgrund der Kombination des Arbeitsspeichers 22 mit der Reibbremse 21 entfällt, welche in der Haltephase betätigt wird und dadurch den Spindelantrieb 11 hubfest arretiert. Mit dem Lösen der Bremse 21 beginnt die Einspritzphase, in welcher die Spindelstange 15 und damit die Plastifizierschnecke 7 unter der additiven Kraftwirkung der Druckfeder 22 und des Elektromotors 17, 18 mit einer dem erforderlichen hohen Einspritzdruck entsprechenden Vorschubkraft verstellt werden, wobei sich die Druckfeder 22 entspannt und der Energiebedarf des Elektromotors 17, 18 dementsprechend ansteigt; in der anschließenden Nachdrückphase am Ende der Vorschubbewegung bleiben die elektromotorischen und Speicherkraftanteile jeweils nahezu konstant.

Um die Plastifizierschnecke 7 entgegen der Restspannung des Arbeitsspeichers 22 in der anschlagfreien Vorschubposition zu halten, wird die entsprechende Haltekraft wiederum nicht vom Elektromotor 17, 18, sondern mit Hilfe der Reibbremse 21 aufgebracht, so dass auch der elektrische Energieanteil B eingespart wird.

In der Befüll- und Plastifizierphase läuft die Plastifizierschnecke 7 aus der Vorschub- in die Rückhubposition, und dabei muss vom Spindelantrieb 11 ein dem Schneckenrückschub entgegenwirkender, im Wesentlichen konstanter Gegendruck aufgebaut werden. Am Anfang des Schneckenrückhubs, also wenn der Arbeitsspeicher 22 entspannt ist und die Speicherkraft nicht zum Aufbau des Gegendrucks ausreicht, wird der fehlende Kraftanteil durch eine gegensinnig zur ansteigenden Speicherkraft dosierte Bremsbetätigung erzeugt, also wiederum nicht mit Hilfe des Elektromotors 17, 18, wodurch der sonst benötigte, elektrische Energieanteil C ebenfalls entfällt. Erst wenn die Federkraft das erforderliche Gegendruckniveau überschreitet, muss der Elektromotor 17, 18 aktiviert werden und die effektive Speicherkraft unter zunehmender Beladung des Arbeitsspeichers 22 auf das geforderte Gegendruckniveau reduzieren, bis sich der Spindelantrieb 11 am Ende der Rückhubbewegung erneut im Ausgangszustand befindet.

Der Spindelantrieb 12 gemäß Fig. 3, wo die dem ersten Ausführungsbeispiel entsprechenden Baukomponenten durch ein um 100 erhöhtes Bezugszeichen gekennzeichnet sind, unterscheidet sich von diesem in erster Linie durch einen anders gestalteten Arbeitsspeicher, der hier als Tellerfederanordnung 23 ausgebildet ist, welche nicht nur der Kraftverstärkung des Elektromotors 117, 118 dient, sondern aufgrund ihrer Torsionssteifigkeit auch die drehfeste Verkoppelung der Spindelstange 115 mit dem gehäuseseitigen Stator 117 übernimmt. Die Federvorspannung ist durch eine Einstellmutter 24 voreinstellbar, um so den Verstärkungseffekt der Tellerfederanordnung 23 individuell an den Leistungsbedarf des jeweiligen Spindelantriebs 12 anpassen zu können. Ferner ist anstelle einer bremskraftregulierbaren Reibbremse eine impulsgesteuert freischaltbare Arretierung zwischen dem Rotor 118 und dem Aufnahmeteil 114 angeordnet, welche im eingerückten Zustand die auf die Spindelstange 115 einwirkende Federkraft auf dem Wege über die Spindelmutter 120 und den Rotor 118 an das Aufnahmeteil 114 überträgt und entweder als umschaltbare Kupplung oder als in Vorschubrichtung der Spindelstange 115 wirkende, in Rückhubrichtung freilaufende Einwegsperre ausgebildet ist. Wie bereits erwähnt, eignet sich der Spindelantrieb 12 vor allem zur Hubsteuerung der Plastifiziereinheit 2 zwischen der Einspritz- und der Rückhubposition. Im Übrigen entspricht die Bau- und Funktionsweise des Spindelantriebs 12, mit Ausnahme der Gegendrucksteuerung, weitgehend der des ersten Ausführungsbeispiels.

Im Rahmen der Erfindung ist es selbstverständlich möglich, den mechanischen Steuermechanismus 21 bzw. 25 auch zwischen der Spindelstange 15; 115 und einem Gehäuseteil oder auch zwischen der Spindelstange 15; 115 und der Spindelmutter 20; 120 anzuordnen.

## Patentansprüche

1. Hubantrieb für die Plastifiziereinheit einer Spritzgießmaschine, bestehend aus einem elektromotorischen Spindelantrieb (10, 11, 12) und einem diesem zugeordneten Arbeitsspeicher (22, 23), der zwangsweise mit der Hubbewegung des Spindelantriebs derart gekoppelt ist, dass er durch den Spindelantrieb in dessen Rückhubphase beladbar ist und in der Vorschubphase des Spindelantriebs unter Kraftverstärkung des Elektromotors (17, 18, 117, 118) entladbar ist,
**dadurch gekennzeichnet,**
**dass** der Spindelantrieb (10, 11, 12) einen parallel zum Arbeitsspeicher (22, 23) zwischen einem der Antriebselemente (20, 120) und einem stationären Gehäuseteil (14, 114) des Spindelantriebs derart wirkenden Steuermechanismus (21, 25) aufweist, dass die effektive Stellkraft des Arbeitsspeichers in Abhängigkeit von der Hubposition des Spindelantriebs durch den Steuermechanismus (21, 25) aktiv modifizierbar ist.

2. Hubantrieb nach Anspruch 1,
**dadurch gekennzeichnet,**
**dass** der Steuermechanismus (21; 25) eine veränderlich einstellbare Kraftkoppelung zwischen dem einen Antriebselement (20; 120) und dem Gehäuseteil (14; 114) enthält.

3. Hubantrieb nach Anspruch 2,
**dadurch gekennzeichnet,**
**dass** die Kraftkoppelung aus einer hubwegabhängig betätigten Bremse (21) bzw. selektiv freischaltbaren Arretierung (25) besteht.

4. Hubantrieb nach Anspruch 3,
**dadurch gekennzeichnet,**
**dass** die Arretierung (25) eine Kupplung ist.

5. Hubantrieb nach Anspruch 3,
**dadurch gekennzeichnet,**
**dass** die Arretierung (25) eine selektiv lösbare Einwegsperre ist.

6. Hubantrieb nach Anspruch 1, mit einem die Hubbewegung zwischen Plastifizierzylinder und Plastifizierschnecke steuernden Spindelantrieb,
**dadurch gekennzeichnet,**
**dass** der Steuermechanismus eine den Arbeitsspeicher (22) in der Hubendlage selektiv arretierende und zu Beginn der Befüllphase die Rückschubkraft der Plastifizierschnecke (7) gegensinnig zur Beladung des Arbeitsspeichers hemmende Reibbremse (21) enthält

7. Hubantrieb nach Anspruch 1, bei der der Spindelantrieb zur Hubsteuerung der Plastifiziereinheit relativ zur Schließeinheit vorgesehen ist,
**dadurch gekennzeichnet,**
**dass** der Steuermechanismus eine das vom Arbeitsspeicher (23) kraftbeaufschlagte Antriebselement (115) zumindest in einer Hirbendlage der Plastifiziereinheit (2) selbsttätig gehäusefest verriegelnde, selektiv lösbare Arretierung (25) enthält.

8. Hubantrieb nach einem der vorhergehenden Ansprüche, mit einer Druckfederanordnung als Arbeitsspeicher,
**dadurch gekennzeichnet,**
**dass** die Federvorspannung des Arbeitsspeichers (23) veränderlich einstellbar ist

9. Hubantrieb nach einem der vorhergehenden Ansprüche,
**dadurch gekennzeichnet,**
**dass** der Arbeitsspeicher aus einem die Spindelstange (115) drehfest sichernden Tellerfederpaket (23) besteht.

## Claims

1. Stroke drive for the plasticizing unit of an injection moulding machine, comprising an electric motor spindle drive (10, 11, 12) and an energy storage device (22, 23) allocated thereto, which is necessarily connected with the stroke movement of the spindle drive such that it can be charged by the spindle drive in its return stroke phase and can be discharged in the advance phase of the spindle drive with the increase in force of the electric motor (17, 18, 117, 118), **characterised in that** the spindle drive (10, 11, 12) has a control mechanism (21, 25) operating in parallel with the energy storage device (22, 23) between one of the drive elements (20, 120) and a stationary housing element (14, 114) of the spindle drive so that the effective actuating force of the energy storage device can be actively modified depending on the stroke position of the spindle drive by the control mechanism (21, 25).

2. Stroke drive according to claim 1, **characterised in that** the control mechanism (21; 25) includes an adjustable force coupling between the one drive element (20; 120) and the housing element (14; 114).

3. Stroke drive according to claim 2, **characterised in that** the force coupling comprises a brake (21) which is activated depending on a stroke movement or a selectively releasable locking device (25).

4. Stroke drive according to claim 3, **characterised in that** the locking device (25) is a coupling.

5. Stroke drive according to claim 3, **characterised in that** the locking device (25) is a selectively releasable one-way locking device.

6. Stroke drive according to claim 1, with a spindle drive controlling the stroke movement between a plasticizing cylinder and a plasticizing screw, **characterised in that** the control mechanism comprises a friction brake (21) that selectively locks the energy storage device (22) at a stroke end position and at the beginning of the filling phase inhibits the return stroke force of the plasticizing screw (7) in opposite direction to the loading of the energy storage device.

7. Stroke drive according to claim 1, wherein the spindle drive is provided for the stroke control of the plasticizing unit relative to the mould closing unit, **characterised in that** the control mechanism comprises a selectively releasable locking device (25) capable of automatically locking the drive element (115) which is force-loaded by the energy storage device (23) in at least one stroke end position of the plasticizing unit (2).

8. Stroke drive according to one of the preceding claims with a compression spring arrangement as an energy storage device, **characterised in that** the spring preloading of the energy storage device (23) is variably adjustable.

9. Stroke drive according to one of the preceding claims, **characterised in that** the energy storage device comprises a cup spring assembly (23) securing the spindle rod (115) rotation-fast.

## Revendications

1. Entraînement de montée pour unité de plastification d'une machine de moulage par injection, constitué d'une broche d'entraînement électromotrice (10, 11, 12) et d'une mémoire vive (22, 23) associée à celle-ci, laquelle est couplée obligatoirement au déplacement de montée de la broche d'entraînement, de telle sorte qu'elle peut être chargée par la broche d'entraînement dans la phase de course de retour de celle-ci et déchargée dans la phase d'avancement de la broche d'entraînement sous l'effet de l'amplification de la puissance du moteur électrique (17, 18, 117, 118),
**caractérisé en ce que**
la broche d'entraînement (10, 11, 12) comprend un mécanisme de commande (21, 25) fonctionnant parallèlement à la mémoire centrale (22, 23) entre un des éléments d'entraînement (20, 120) et une partie de boîtier stationnaire (14, 114) de la broche d'entraînement, de telle sorte que la puissance de réglage effective de la mémoire centrale peut être modifiée activement par le mécanisme de commande (21, 25) en fonction de la position de montée de la broche d'entraînement.

2. Entraînement de montée selon la revendication 1,
**caractérisé en ce que**
le mécanisme de commande (21, 25) contient un couplage de force pouvant être réglé de façon variable entre un des éléments d'entraînement (20 ; 120) et la partie de boîtier (14 ; 114).

3. Entraînement de montée selon la revendication 2,
**caractérisé en ce que**
le couplage de force est constitué d'un frein (21) pouvant être actionné en fonction du trajet de montée et/ou d'un dispositif d'arrêt (25) pouvant être commuté librement de façon sélective.

4. Entraînement de montée selon la revendication 3,
**caractérisé en ce que**
le dispositif d'arrêt (25) est un couplage.

5. Entraînement de montée selon la revendication 3,
**caractérisé en ce que**
le dispositif d'arrêt (25) est un dispositif de verrouillage unidirectionnel pouvant être desserré de façon sélective.

6. Entraînement de montée selon la revendication 1, comprenant une broche d'entraînement commandant le déplacement de montée entre le cylindre de plastification et la vis sans fin de plastification,
**caractérisé en ce que**
le mécanisme de commande contient un frein à friction (21) arrêtant de manière sélective la mémoire centrale (22) dans la position finale de montée et bloquant au début de la phase de remplissage la force de recul de la vis sans fin de plastification (7) dans le sens inverse du chargement de la mémoire centrale.

7. Entraînement de montée selon la revendication 1, dans lequel la broche d'entraînement est prévue pour commander la montée de l'unité de plastification par rapport à l'unité de fermeture,
**caractérisé en ce que**
le mécanisme de commande contient un dispositif d'arrêt (25) pouvant être desserré de manière sélective, verrouillant automatiquement et fixement sur le boîtier l'élément d'entraînement (115) sollicité par force par la mémoire centrale (23) au moins dans une position finale de montée de l'unité de plastification (2).

8. Entraînement de montée selon l'une quelconque des revendications précédentes, comprenant un système de ressorts de pression comme mémoire centrale,
**caractérisé en ce que**
la précontrainte de ressort de la mémoire centrale (23) peut être réglée de manière variable.

9. Entraînement de montée selon l'une quelconque des revendications précédentes,
**caractérisé en ce que**
la mémoire centrale est constituée d'un paquet de rondelles Belleville (23) bloquant la tige de broche (115) de manière résistant à la rotation.
